# EUROPÄISCHE PATENTSCHRIFT

(11) **EP 3 352 955 B1**
(45) Veröffentlichungstag und Bekanntmachung des Hinweises auf die Patenterteilung: **29.01.2020**
(21) Anmeldenummer: 16760016.2
(22) Anmeldetag: 24.08.2016
(51) Int. Cl.: B25J 15/02, B23B 31/177

(54) **GREIF- ODER SPANNVORRICHTUNG**
GRIPPING OR CLAMPING DEVICE
DISPOSITIF DE PRÉHENSION OU DE SERRAGE

(30) Priorität: 22.09.2015 DE 102015218127
(43) Veröffentlichungstag der Anmeldung: 01.08.2018
(73) Patentinhaber: Schunk GmbH & Co. KG Spann- und Greiftechnik, 74348 Lauffen am Neckar (DE)
(72) Erfinder: KIRSTEN, Benjamin, 74336 Brackenheim (DE); WUETHERICH, Samuel, 74397 Pfaffenhofen (DE)
(74) Vertreter: DREISS Patentanwälte PartG mbB
(86) Internationale Anmeldenummer: PCT/EP2016/070017
(87) Internationale Veröffentlichungsnummer: WO 2017/050514

(56) Entgegenhaltungen:
- EP-B1- 1 263 554
- DE-A1- 3 736 148
- DE-U1-202011 103 200

## Beschreibung

Die Erfindung betrifft eine Greif- oder Spannvorrichtung mit einem Grundgehäuse, mit wenigstens einer im Grundgehäuse entlang einer Spannrichtung ein- und ausfahrbaren Grundbacke, mit einem quer zur Spannrichtung, entlang einer Führungsachse antreibbaren Keilhaken, wobei der Keilhaken wenigstens einen Haken und einen zwischen dem Haken und der Führungsachse liegenden Steg mit einem Stegabschnitt aufweist, wobei der Haken schräg zur Spannrichtung und zur Führungsachse verlaufende, parallel zueinander angeordnete Führungsflächen aufweist, die mit einer parallel dazu verlaufenden, grundbackenseitigen Führungsnut derart bewegungsgekoppelt sind, dass eine Verlagerung des Keilhakens entlang der Führungsachse zu einer Verlagerung der Grundbacke entlang der Spannrichtung führt.

Bei den Spannvorrichtungen kann es sich beispielsweise um Spannfutter, insbesondere einer Drehmaschine oder Schraubstöcke handeln. Bei den Greif- oder Spannvorrichtungen kann es sich insbesondere um Parallel- oder Zentrischgreifer handeln. Dementsprechend kann es sich bei den Grundbacken um Greiferbacken oder Spannbacken handeln.
Derartige Spann- oder Greifvorrichtungen sind in vielfältiger Weise aus dem Stand der Technik vorbekannt.

Beispielsweise ist aus der EP 1 263 554 B1 ein Parallelgreifer mit einem Gehäuse und zwei verstellbaren Grundbacken, welche in einem Gehäuse in einer Backenführung verschieblich gelagert sind, vorbekannt. Die Grundbacken sind dabei mittels eines Keilhakengetriebes verstellbar.

Aus der DE 20 2011 103 200 U1 ist eine Greif- oder Spannvorrichtung mit Merkmalen des Oberbegriffs des Patentanspruchs 1 bekannt. Aus der DE 37 36 148 A1 ist eine Greifvorrichtung bekannt, bei der Greifbacken mit Führungsbolzen vorgesehen sind, die in an einem Umlenkteil vorgesehene Führungsschlitze eingreifen.

Es hat sich herausgestellt, dass ein Bedürfnis nach einer möglichst kompakten Bauweise derartiger Spann- oder Greifvorrichtungen besteht.

Weiterhin besteht das Bedürfnis nach einer Reduzierung der Flächenpressung zwischen Keilhaken und Grundbacken ohne Vergrößerung des beanspruchten Bauraums.

Demgemäß ist es Aufgabe der Erfindung, Spann- oder Greifvorrichtungen der eingangs genannten Art derart weiterzubilden, dass auf möglichst einfache Art und Weise eine Reduzierung des Bauraums oder eine Reduzierung der Flächenpressung zwischen Keilhaken und Grundbacken bei gleichbleibendem Bauraum erzielt wird.

Diese Aufgabe wird mit einer Spann- oder Greifvorrichtung mit den Merkmalen des Anspruchs 1 gelöst.

Die erfindungsgemäße Spann- oder Greifvorrichtung bietet den Vorteil, dass bei gleichbleibendem Kolbenhub und gleichbleibender Überdeckung zwischen Keilhaken und Grundbacke eine reduzierte Bauhöhe der Greif- oder Spannvorrichtung erzielt werden kann. Der Verfahrweg der Grundbacke bleibt dennoch gleich. Andererseits kann bei gleichbleibender Bauhöhe eine Reduzierung der Flächenpressung zwischen Grundbacke und Keilhaken bereitgestellt werden.

Es ist folglich denkbar, die Bauraumhöhe der Greif- oder Spannvorrichtung durch folgendes Vorgehen zu reduzieren: Die Gesamthocherstreckung des Keilhakens gegenüber dem aus der EP 1 263 554 B1 vorbekannten Keilhaken, kann um ein gewisses Maß reduziert werden. Dadurch werden die Führungsflächen um ein gewisses Maß reduziert. Um dieses Maß können die Führungsflächen jedoch nach unten hin verlängert werden, indem am Keilhaken der Verlängerungsabschnitt ausgebildet wird. Andererseits ist auch denkbar, die Bauraumhöhe und damit einhergehend die Gesamthocherstreckung des Keilhakens konstant zu halten und stattdessen den Verlängerungsabschnitt dazu zu verwenden, die Flächenpressung zwischen Führungsnut und Keilhaken dadurch zu reduzieren, dass die Führungsflächen vergrößert werden. Damit ist eine größere Kontaktfläche zwischen Grundbacke und Keilhaken bereitstellbar, wodurch eine Reduzierung der Flächenpressung erzielt werden kann.

Dabei ist denkbar, dass in eine Bewegungsrichtung der Grundbacke lediglich eine der Führungsflächen mit der grundbackenseitigen Führungsnut in unmittelbarem Eingriff durch Berührkontakt ist, während in die umgekehrte Bewegungsrichtung eine andere Führungsfläche mit der Grundbacke in unmittelbarem Eingriff durch Berührkontakt ist. Andererseits ist auch denkbar, dass alle Führungsflächen ständig mit der Führungsnut in Berührkontakt sind.

Vorteilhafterweise weist der Keilhaken einen sich in der oder um die Führungsachse erstreckenden Stellabschnitt auf. Insbesondere kann dabei weiter vorgesehen sein, dass der Stellabschnitt den Verlängerungsabschnitt in Führungsachsenrichtung überragt. Der Stellabschnitt kann ferner insbesondere mit einem in einem Zylinderraum verschieblich angeordneten Kolben verbunden sein, so dass eine hydraulische oder pneumatische Stelleinrichtung zur Bewegung der Grundbacken über den Keilhaken bereitgestellt werden kann.

Besonders vorteilhafterweise sind die Außenkonturen der parallel zueinander verlaufenden Führungsflächen in Spannrichtung oder in senkrecht zur Ebene der Führungsflächen gesehen deckungsgleich. Damit kann eine besonders vorteilhafte Kräfteübertragung vom Keilhaken zur Grundbacke bereitgestellt werden. Insbesondere kann der Haken dabei zylindrisch oder als Parallelepiped ausgebildet sein. Der Keilhaken ist damit besonders einfach herstellbar.

Insbesondere kann der Stegabschnitt eine senkrecht zur Führungsachse in einer Ebene E2 verlaufende Unterseite aufweisen. Ferner können die Führungsflächen jeweils eine untere Kante mit einer senkrecht zur Führungsachse verlaufenden Unterseite des Hakens bilden, wobei die unteren Kanten in einer Ebene E3 liegen können, und wobei die Ebene E3 von der Ebene E2 beabstandet ist. Damit wird am Haken ein sich nach unten erstreckender Verlängerungsabschnitt ausgebildet.

Das Verhältnis des Abstandes der Ebene E₂ von Ebene E₃ zu dem Abstand der Ebene E₁ und Ebene E₃ kann vorteilhafterweise im Bereich von 0,15 bis 0,35 und insbesondere im Bereich von 0,25 liegen.

Der Abstand der Ebene E₂ zur Ebene E₃ liegt vorzugsweise im Bereich von 1 mm bis 4 mm und insbesondere im Bereich von 1,5 mm bis 3,0 mm.

Vorzugsweise ist im Grundgehäuse in dem dem Verlängerungsabschnitt zugewandten Bereich eine Ausnehmung zur Aufnahme des Verlängerungsabschnitts bei eingefahrener bzw. ausgefahrener Grundbacke vorgesehen. Je nach Orientierung der Führungsflächen ist in dieser Endlage die Grundbacke entweder eingefahren oder ausgefahren. Der Verlängerungsabschnitt taucht dabei zumindest abschnittsweise, vorzugsweise vollständig, in die Ausnehmung ein. Damit kann der Keilhaken in dieselbe Endlage (Grundbacke in eingefahrener oder ausgefahrener Position, je nach Orientierung der Führungsnuten) einfahren, wie sie bei vorbekannten Spann- oder Greifvorrichtungen, bei denen kein Verlängerungsabschnitt vorhanden ist, üblich ist.

In der ausgefahrenen bzw. eingefahrenen Position, wiederum je nach Orientierung der Keilhaken, kann die Oberseite des Hakens bzw. des Keilhakens mit der Oberseite des grundbackenseitigen Eingriffsabschnitts, welcher die Führungsnut begrenzt, in einer senkrecht zur Führungsachse verlaufenden Ebene liegen. Es kann folglich eine durchgehende Ebene ausgebildet sein und der Keilhaken ragt nicht über das Grundgehäuse hinaus.

Der Haken und/oder der die Führungsnut begrenzende grundbackenseitige Eingriffsabschnitt können weiterhin Verrundungsbereiche aufweisen, um die Kerbwirkung in den Innen- und/oder Außenkanten zu reduzieren. Insbesondere können alle Kanten der Führungsnuten verrundet ausgebildet sein.

Gemäß einer besonders vorteilhaften Ausgestaltung der Erfindung ist der Steg im Bereich der der Führungsachse zugewandten inneren Führungsfläche an den Haken angeformt. Die der Führungsachse zugewandte innere Führungsfläche entspricht dabei der bezüglich der Führungsachse radial inneren Führungsfläche, während die der Führungsachse abgewandte äußere Führungsfläche der bezüglich der Führungsachse radial äußeren Führungsfläche entspricht.

Damit umfasst die innere Führungsfläche zwei voneinander beabstandete spiegelsymmetrisch zueinander verlaufende freie Führungsflächenabschnitte. Liegen die Oberseiten des Stegs und des Hakens in einer gemeinsamen Ebene, so kann die Außenkontur der inneren Führungsfläche durch den Stegunterbrochen sein bzw. von diesem gebildet werden.

Vorteilhafterweise weist der Stellabschnitt eine äußere Mantelfläche auf. Der Stellabschnitt kann dabei insbesondere kreiszylindrisch ausgebildet sein. Ferner kann die Mantelfläche insbesondere als Dicht- und/oder Führungsfläche ausgebildet sein, wobei die Mantelfläche insbesondere mit einer komplementären grundgehäuseseitigen Fläche zusammenwirken kann. Dabei kann insbesondere vorgesehen sein, dass der Verlängerungsabschnitt das dem Steg zugewandte freie Ende der Mantelfläche in Führungsachsenrichtung überragt. Allerdings ist auch denkbar, dass das dem Steg zugewandte freie Ende der Mantelfläche den Verlängerungsabschnitt in Führungsachsenrichtung überragt.

Gemäß einer besonders vorteilhaften Ausgestaltung der Erfindung ist die Greif- oder Spannvorrichtung als Parallelgreifer bzw. Parallelspanner ausgebildet. Dabei sind zwei entlang der Spannrichtungen aufeinander zu und voneinander weg bewegbare Grundbacken vorgesehen. Ferner kann vorgesehen sein, dass der Keilhaken zwei Haken und je einen zwischen dem jeweiligen Haken und der Führungsachse liegenden Steg aufweist, wobei je ein Haken mit je einer Grundbacke zusammenwirkt. Folglich kann mittels eines einzigen Keilhakens eine Betätigung beider Grundbacken erfolgen. Gemäß einer weiteren Ausgestaltung der Erfindung ist die Greif- oder Spannvorrichtung als Zentrischgreifer bzw. Zentrischspanner ausgebildet, wobei insbesondere vorgesehen sein kann, dass der Keilhaken drei Haken und je einen zwischen dem jeweiligen Haken und der Führungsachse liegenden Steg aufweist, wobei je ein Haken mit je einer Grundbacke zusammenwirkt.
Der Keilhaken kann dabei insbesondere einstückig ausgebildet sein. Andererseits ist auch denkbar, dass der Haken und der Steg einstückig ausgebildet sind, während der Stellabschnitt als separates Bauteil ausgebildet sein kann. Dabei kann der Stellabschnitt an den Steg angeschraubt sein. Ferner ist denkbar, dass der Kolben separat vom Stellabschnitt ausgebildet ist, wobei insbesondere denkbar ist, dass der Steg, der Stellabschnitt und der Kolben mittels einer einzigen Schraubverbindung miteinander verbunden sind.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert werden.
- Figur 1:: Perspektivische Ansicht eines Parallelgreifers;
- Figur 2:: Querschnitt durch den Parallelgreifer gemäß Figur 1 mit eingefahrenen Backen;
- Figur 3:: Querschnitt durch den Parallelgreifer gemäß Figur 1 mit teilweise ausgefahrenen Backen;
- Figur 4:: perspektivische Ansicht des Keilhakens des in den Figuren 1 bis 3 gezeigten Parallelgreifers;
- Figur 5:: Seitenansicht auf den Keilhaken gemäß Figur 4;
- Figur 6:: Querschnitt durch den Keilhaken gemäß Figur 4.
- Figur 7:: Querschnitt durch einen mehrteiligen Keilhaken;
- Figur 8:: Perspektivische Darstellung eines Keilhakens für einen Zentrischgreifer.

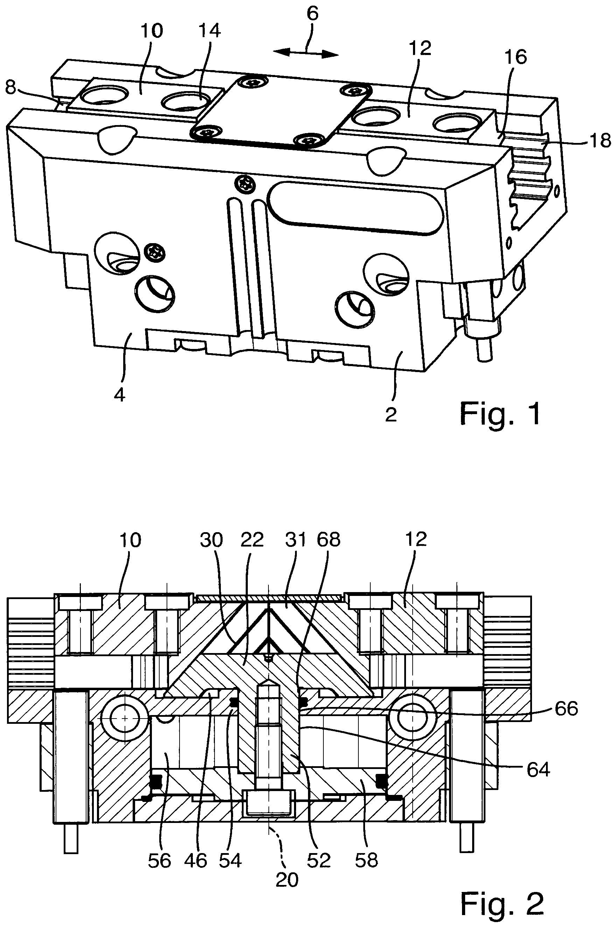

Die Figur 1 zeigt eine als Parallelgreifer ausgebildete Greifvorrichtung 2. Diese umfasst ein Grundgehäuse 4 mit einer in Spannrichtung 6 verlaufenden Backenführung 8 für Greiferbacken 10, 12, welche in Spannrichtung 6 in die Backenführung 8 einführbar und darin ein- und ausfahrbar gelagert sind. Die Spannrichtung 6 entspricht dabei auch der Längsrichtung 6. Auf den Oberseiten der Greiferbacken 10, 12 sind Montageöffnungen 14 zum lösbaren Anbringen von Greiferfingerelementen im weitesten Sinne vorgesehen, die hier nicht weiter beschrieben werden sollen.
Wie aus der Figur 1 weiter hervorgeht, weisen die Greiferbacken 10, 12 jeweils beidseits sich in Verschieberichtung erstreckende Führungsstege 16 auf, die keil- bzw. trapezförmig mit abgeflachten freiem Ende ausgebildet sind und die in grundgehäuseseitige Führungsnuten 18 eingreifen.

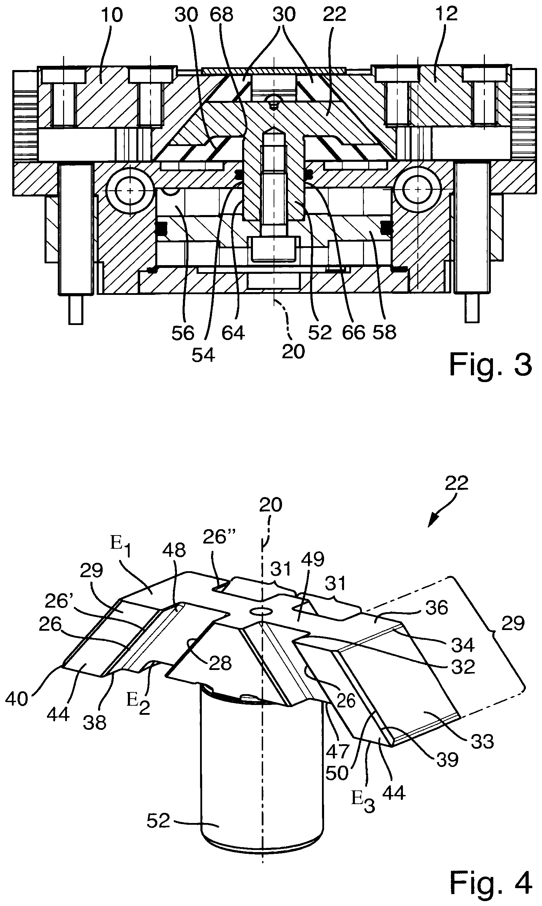

Zum Verstellen der Greiferbacken 10, 12 ist ein Keilhakengetriebe vorgesehen. Der Keilhaken 22 ist quer zur Spannrichtung 6 entlang einer Führungsachse 20, welche in den Figuren 2 und 3 deutlich zu erkennen ist, antreibbar.

Wie in den Figuren 4 bis 6 gezeigt ist, umfasst der Keilhaken 22 zwei spiegelsymmetrisch zueinander angeordnete Haken 29 sowie zwischen den Haken 29 in der Führungsachse 20 liegende Stege 35 mit jeweils einem Stegabschnitt 31. Die Haken 29 umfassen ferner jeweils zwei schräg zur Spannrichtung 6 und zur Führungsachse 20 verlaufende parallel zueinander angeordnete Führungsflächen 26, 33. Die Stege 35 erstrecken sich dabei von der Führungsachse 20 bis zum Haken 29.

Wie aus den Figuren 2 und 3 hervorgeht, sind die Führungsflächen 26, 33 mit einer parallel dazu verlaufenden Führungsnut 30 derart bewegungsgekoppelt, dass eine Verlagerung des Keilhakens 22 entlang der Führungsachse 20 zu einer Verlagerung der Grundbacken 10, 12 entlang der Spannrichtung 6 führt.

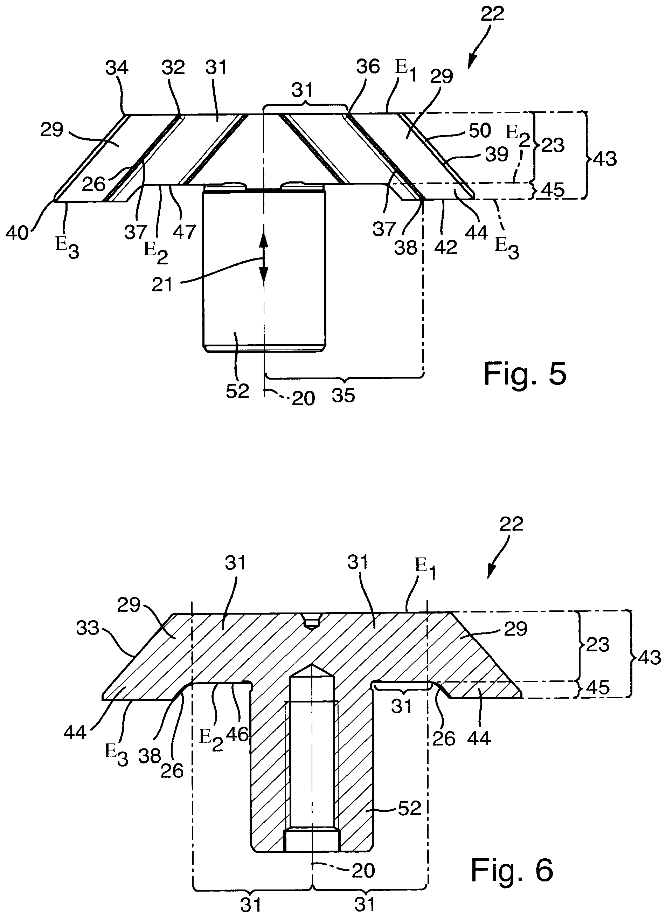

Die Haken 29 bzw. die Führungsflächen 26, 33 weisen dabei - wie aus Figur 5 und 6 deutlich wird - eine sich in Führungsachsenrichtung 21 erstreckende Hocherstreckung 43 auf, die größer ist als die Hocherstreckung 23 der Stegabschnitte 31, so dass die Haken 29 jeweils einen sich in Führungsachsenrichtung 21 erstreckenden Verlängerungsabschnitts 44 mit einer Hocherstreckung 45 aufweisen. Die Hocherstreckung 43 der Haken 29 setzt sich folglich aus den Hocherstreckungen 23, 45 des jeweiligen Stegabschnitts 31 und des jeweiligen Verlängerungsabschnitts 44 zusammen. Der Keilhaken 22 umfasst ferner einen sich um die Führungsachse 20 erstreckenden zylindrischen Stellabschnitt 52 auf, wobei der Stellabschnitt 52 den Verlängerungsabschnitt 44 in Führungsachsenrichtung 21 überragt.

Wie in den Figuren 2 und 3 zu erkennen ist, durchgreift der Stellabschnitt 52 eine Öffnung 54 im Boden der Backenführung 8 und greift in einen darunter angeordneten Zylinderraum 56 des Grundgehäuses 2 ein. Am unteren Ende des Stellabschnitts 52 ist ein Kolben 58 angeordnet, wobei der Kolben 58 verschieblich im Zylinderraum 56 gelagert ist, so dass der Zylinderraum 56 mit dem Kolben 58 eine hydraulische oder pneumatische Stelleinrichtung für den Keilhaken 22 ausbildet. Dabei weist der Stellabschnitt 52 eine äußere Mantelfläche 64 auf, die als Führungs- und Dichtfläche ausgebildet ist und mit der dazu komplementären die Öffnung 54 begrenzenden gehäuseseitigen Fläche 66 zusammenwirkt. Dabei überragt der Verlängerungsabschnitt 44 das dem Steg 35 zugewandte freie Ende 68 der Mantelfläche 64 in Führungsachsenrichtung.

Wie insbesondere aus Figur 4 hervorgeht, sind die Außenkonturen der parallel zueinander verlaufenden Führungsflächen 26, 33 in Spannrichtung 6 und auch in senkrecht zur Ebene der Führungsflächen 26, 33 gesehen, deckungsgleich. Dabei ist der Steg 35 im Bereich der der Führungsachse 20 zugewandten anderen Führungsfläche 26 an den Haken 29 angeformt, so dass die innere Führungsfläche 26 voneinander beabstandete spiegelsymmetrisch zueinander verlaufende Führungsflächenabschnitte 26' sowie 26" umfasst. Die Außenkontur der inneren Führungsfläche 26 wird folglich in demjenigen Bereich unterbrochen, in dem der Steg 35 an den Haken 29 angeformt ist. Dennoch ist die Außenkontur der Führungsfläche 26 dieselbe wie diejenige der äußeren Führungsfläche 33.

Der Haken 29 ist dabei zylindrisch und als Parallelepiped ausgebildet.

Wie den Figuren 4 bis 6 weiter zu entnehmen ist, weist der Stegabschnitt 31 eine senkrecht zur Führungsachse 20 in einer Ebene E2 verlaufende Unterseite 47 auf, wobei die Führungsflächen 26, 33 jeweils eine untere Kante 38, 40 mit einer senkrecht zur Führungsachse 20 verlaufenden Unterseite 42 des Hakens 29, und wobei die unteren Kanten 38, 40 in einer Ebene E3 liegen. Dabei ist die Ebene E3 von der Ebene E2 um eine Hocherstreckung 45 beabstandet. Ferner bilden die Führungsflächen 26, 33 eine obere Kante 32, 34 mit einer senkrecht zur Führungsachse 20 verlaufenden Oberseite 36 des Hakens 29. Die oberen Kanten 32, 34 liegen in einer gemeinsamen senkrecht zur Führungsachse verlaufenden Ebene E1. Auch der Stegabschnitt 31 weist eine Oberseite 49 auf, welche in der Ebene E1 verläuft. Dabei ist die Ebene E1 von der Ebene E2 um einen Abstand bzw. die Hocherstreckung 23 beabstandet. Weiterhin ist die Ebene E3 von der Ebene E1 um die Hocherstreckung 43 beabstandet, die größer ist als der Abstand bzw. die Hocherstreckung 23 der Ebene E2 von der Ebene E1. Damit weist der Haken 29 einen sich nach unten erstreckenden Verlängerungsabschnitt 44 auf.

Das Verhältnis V des Abstandes der Ebene E₂ von der Ebene E₃ zu dem Abstand der Ebene E₁ von der Ebene E₃ liegt dabei im Bereich von 0,15 0,25 und insbesondere von 0,2.

Wie in den Figuren 2 und 3 weiter zu erkennen ist, weist das Grundgehäuse 2 in dem dem Verlängerungsabschnitt 44 zugewandten Bereich zwei Ausnehmung 46 zur Aufnahme des jeweiligen Verlängerungsabschnitts 44 bei eingefahrenen Grundbacken 10, 12 auf. Die Ausnehmungen 46 können insbesondere jeweils zylindrisch ausgebildet sein und eine rechteckige oder quadratische Grundfläche aufweisen.

Zur Reduzierung der Kerbwirkung sind sämtliche Kanten 48, 50 des Hakens 29 verrundet ausgebildet, sodass Verrundungsbereiche 37, 39 ausgebildet werden.

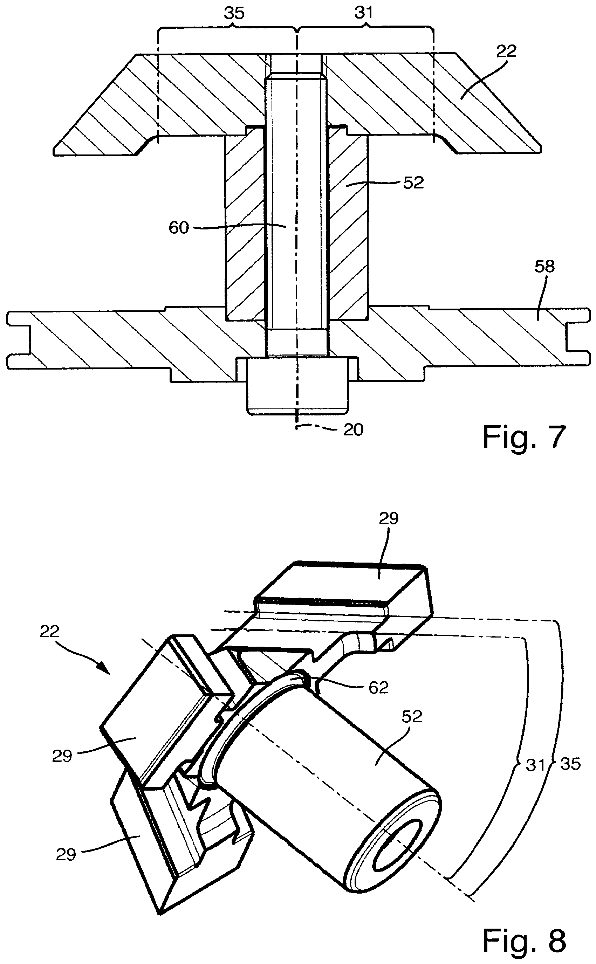

Gemäß Figur 7 ist der Haken 29 mit dem Steg 35 einstückig ausgebildet. Mittels einer Schraubverbindung 60 sind der Stellabschnitt 52 sowie der Kolben 58 am Steg 35 befestigt, die jeweils als separate Bauteile ausgebildet sind.

Figur 8 zeigt einen Keilhaken 22 für einen Zentrischgreifer. Dabei weist der Keilhaken 22 drei Haken 29 und je einen zwischen dem jeweiligen Haken 29 und der Führungsachse liegenden Steg 35 mit jeweils einem Stegabschnitt 31 auf, wobei je ein Haken 29 mit je einer Grundbacke zusammenwirkt. Am freien Ende 68 der Mantelfläche 64 ist ein Freistich 62 vorgesehen, der zur Reduzierung der Kerbwirkung dient.

Eine Reduzierung der Bauhöhe der Greifvorrichtung 2 ohne Einbußen beim Verfahrweg der Grundbacken 10, 12 kann folglich dadurch erzielt werden, dass die gesamte Hocherstreckung der Keilhakens 22 um eine gewisses Maß reduziert wird und der Verlängerungsabschnitt 44 ausgebildet wird, wobei dieser eine Hocherstreckung in genau diesem Maß aufweist. Andererseits kann die Flächenpressung bei gleichbleibendem Bauraum dadurch reduziert werden, dass bei der Verlängerungsabschnitt 44 ohne Reduzierung der gesamten Hocherstreckung des Keilhakens 22 ausgebildet wird. Dadurch kann eine Vergrößerung der Kontaktfläche zwischen den Führungsflächen 26, 33 ausgebildet werden, was zu einer vorteilhaften Reduzierung der Flächenpressung führt.

## Patentansprüche

1. Greif- oder Spannvorrichtung (2) mit einem Grundgehäuse (4), mit wenigstens einer im Grundgehäuse (4) entlang einer Spannrichtung (6) ein- und ausfahrbaren Grundbacke (10, 12), mit einem quer zur Spannrichtung (6), entlang einer Führungsachse (20) antreibbaren Keilhaken (22), wobei der Keilhaken (22) wenigstens einen Haken (29) und einen zwischen dem Haken (29) und der Führungsachse (20) liegenden Steg (35) mit einem Stegabschnitt (31) aufweist, wobei der Haken (29) schräg zur Spannrichtung (6) und zur Führungsachse (20) verlaufende, parallel zueinander angeordnete Führungsflächen (26, 33) aufweist, die mit einer parallel dazu verlaufenden, grundbackenseitigen Führungsnut (30) derart bewegungsgekoppelt sind, dass eine Verlagerung des Keilhakens (22) entlang der Führungsachse (20) zu einer Verlagerung der Grundbacke (10, 12) entlang der Spannrichtung (6) führt, wobei der Haken (29) eine sich in Führungsachsenrichtung (21) erstreckende Hocherstreckung (43) aufweist, die größer ist als die Hocherstreckung (23) des Stegabschnitts (31), so dass der Haken (29) einen sich in Führungsachsenrichtung (21) erstreckenden Verlängerungsabschnitt (44) ausbildet, wobei die Führungsflächen (26, 33) in Spannrichtung (6) deckungsgleich sind, und wobei der Haken (29) zylindrisch oder als Parallelepiped ausgebildet ist, **dadurch gekennzeichnet, dass** die Führungsflächen (26, 33) jeweils eine obere Kante (32, 34) mit einer senkrecht zur Führungsachse (20) verlaufenden Oberseite (36) des Hakens (29) bilden, wobei die oberen Kanten (32, 34) und die Oberseite (36) des Hakens (29) in einer senkrecht zur Führungsachse (20) verlaufenden Ebene E₁ liegen, und dass der Stegabschnitt (31) eine senkrecht zur Führungsachse (20), in der Ebene E₁ verlaufende Oberseite (49) aufweist.

2. Greif- oder Spannvorrichtung (2) nach Anspruch 1, **dadurch gekennzeichnet, dass** der Keilhaken (22) einen sich in der oder um die Führungsachse (20) erstreckenden Stellabschnitt (52) aufweist, wobei der Stellabschnitt (52) den Verlängerungsabschnitt (44) in Führungsachsenrichtung überragt.

3. Greif- oder Spannvorrichtung (2) nach einem der vorhergehenden Ansprüche, **dadurch gekennzeichnet, dass** der Stegabschnitt (31) eine senkrecht zur Führungsachse (20) in einer Ebene E₂ verlaufende Unterseite (47) aufweist, dass die Führungsflächen (26, 33) jeweils eine untere Kante (38, 40) mit einer senkrecht zur Führungsachse (20) verlaufenden Unterseite (42) des Hakens (29) bilden, wobei die unteren Kanten (38, 40) in einer Ebene E₃ liegen, und wobei die Ebene E₃ von der Ebene E₂ beabstandet ist, sodass sich der Verlängerungsabschnitt (44) nach unten erstreckt.

4. Greif- oder Spannvorrichtung (2) nach Anspruch 3, **dadurch gekennzeichnet, dass** das Verhältnis V des Abstandes der Ebene E₂ von Ebene E₃ zu dem Abstand der Ebene E₁ von Ebene E₃ im Bereich von 0,15 bis 0,35 und insbesondere im Bereich von 0,25 liegt und/oder dass der Abstand der Ebene E₂ zur Ebene E₃ im Bereich von 1 mm bis 4 mm und insbesondere im Bereich von 1,5 mm bis 2,5 mm liegt.

5. Greif- oder Spannvorrichtung (2) nach einem der vorhergehenden Ansprüche, **dadurch gekennzeichnet, dass** das Grundgehäuse (4) in dem dem Verlängerungsabschnitt (44) zugewandten Bereich eine Ausnehmung (46) zur Aufnahme des Verlängerungsabschnitts (44) bei eingefahrener bzw. ausgefahrener Grundbacke (10, 12) aufweist.

6. Greif- oder Spannvorrichtung (2) nach einem der vorhergehenden Ansprüche, **dadurch gekennzeichnet, dass** in der ausgefahrenen bzw. eingefahrenen Position der Grundbacke (10, 12) die Oberseite des Hakens (29) mit der Oberseite eines die Führungsnut (30) begrenzenden grundbackenseitigen Abschnitts in einer senkrecht zur Führungsachse (20) verlaufenden Ebene liegt.

7. Greif- oder Spannvorrichtung (2) nach einem der vorhergehenden Ansprüche, **dadurch gekennzeichnet, dass** der Haken (29) und/oder der die Führungsnut (30) begrenzende grundbackenseitige Abschnitt Verrundungsbereiche (37, 39) aufweisen.

8. Greif- oder Spannvorrichtung (2) nach einem der vorhergehenden Ansprüche, **dadurch gekennzeichnet, dass** der Stegabschnitt (31) im Bereich der der Führungsachse (20) zugewandten inneren Führungsfläche an den Haken (29) angeformt ist, sodass die innere Führungsfläche (26) zwei voneinander beabstandete spiegelsymmetrisch zueinander verlaufende Führungsflächenabschnitte (26', 26'') umfasst.

9. Greif- oder Spannvorrichtung (2) nach einem der Ansprüche 2 bis 8, **dadurch gekennzeichnet, dass** der Stellabschnitt (52) eine äußere Mantelfläche (64) aufweist, wobei die Mantelfläche (64) als Dicht- und/oder Führungsfläche ausgebildet ist, und wobei der Verlängerungsabschnitt (44) das dem Steg (35) zugewandte freie Ende (68) der Mantelfläche (64) in Führungsachsenrichtung überragt.

10. Greif- oder Spannvorrichtung (2) nach einem der vorhergehenden Ansprüche, **dadurch gekennzeichnet, dass** mindestens zwei entlang der Spannrichtung (6) aufeinander zu und voneinander weg bewegbare Grundbacken (10, 12) vorgesehen sind, und dass der Keilhaken (22) mindestens zwei Haken (29) und je einen zwischen dem jeweiligen Haken (29) und der Führungsachse (20) liegenden Stegabschnitt (31) umfasst, wobei je ein Haken (29) mit je einer Grundbacke (10, 12) zusammenwirkt.

## Claims

1. Gripping or clamping device (2) having a main housing (4), having at least one main jaw (10, 12) that is extendable and retractable in a clamping direction (6) in the main housing (4), having a wedge hook (22) that is drivable transversely to the clamping direction (6) along a guide axis (20), the wedge hook (22) having at least one hook (29) and a web (35), located between the hook (29) and the guide axis (20), with a web portion (31), the hook (29) having guide surfaces (26, 33) that extend obliquely with respect to the clamping direction (6) and to the guide axis (20) and are arranged parallel to one another, said guide surfaces being coupled in terms of movement to a main-jaw-side guide groove (30) that extends parallel thereto, such that a movement of the wedge hook (22) along the guide axis (20) results in a movement of the main jaw (10, 12) in the clamping direction (6), the hook (29) having a vertical extent (43) in the guide-axis direction (21) that is greater than the vertical extent (23) of the web portion (31), such that the hook (29) forms an extension portion (44) that extends in the guide-axis direction (21), the guide surfaces (26, 33) being congruent in the clamping direction, and the hook (29) being cylindrical or being designed as a parallelepiped, **characterized in that** the guide surfaces (26, 33) each form an upper edge (32, 34) together with an upper face (36) of the hook (29) that extends perpendicularly with respect to the guide axis (20), the upper edges (32, 34) and the upper face (36) of the hook (29) being in a plane E1 that extends perpendicularly with respect to the guide axis (20), and **in that** the web portion (31) has an upper face (49) that extends perpendicularly with respect to the guide axis (20), in the plane E1.

2. Gripping or clamping device (2) according to claim 1, **characterized in that** the wedge hook (22) comprises an adjustment portion (52) that extends along or around the guide axis (20), the adjustment portion (52) protruding beyond the extension portion (44) in the guide-axis direction.

3. Gripping or clamping device (2) according to any of the preceding claims, **characterized in that** the web portion (31) comprises a lower face (47) that extends perpendicularly with respect to the guide axis (20), in a plane E2, **in that** the guide surfaces (26, 33) each form a lower edge (38, 40) together with a lower face (42) of the hook (29) that extends perpendicularly with respect to the guide axis (20), the lower edges (38, 40) being in a plane E3, and the plane E3 being spaced apart from the plane E2 such that the extension portion (44) extends downwards.

4. Gripping or clamping device (2) according to claim 3, **characterized in that** the ratio V of the spacing of the plane E2 from the plane E3 to the spacing of the plane E1 from the plane E3 is in the range of from 0.15 to 0.35 and in particular in the region of 0.25, and/or **in that** the spacing of the plane E2 from the plane E3 is in the range of from 1 mm to 4 mm and in particular in the range of from 1.5 mm to 2.5 mm.

5. Gripping or clamping device (2) according to any of the preceding claims, **characterized in that**, in the region facing the extension portion (44), the main housing (4) comprises a recess (46) for receiving the extension portion (44) when the main jaws (10, 12) are extended or retracted.

6. Gripping or clamping device (2) according to any of the preceding claims, **characterized in that**, in the extended or retracted position of the main jaw (10, 12), the upper face of the hook (29) and the upper face of a main-jaw-side portion that defines the guide groove (30) are in a plane extending perpendicularly with respect to the guide axis (20).

7. Gripping or clamping device (2) according to any of the preceding claims, **characterized in that** the hook (29) and/or the main-jaw-side portion that defines the guide groove (30) comprise rounded regions (37, 39).

8. Gripping or clamping device (2) according to any of the preceding claims, **characterized in that** the web portion (31) is integrally formed on the hook (29) in the region of the inner guide surface facing the guide axis (20), such that the inner guide surface (26) comprises two mutually spaced and mutually mirror-symmetrical guide surface portions (26', 26").

9. Gripping or clamping device (2) according to any of claims 2 to 8, **characterized in that** the adjustment portion (52) comprises an outer lateral surface (64), the lateral surface (64) being designed as a sealing and/or guide surface, and the extension portion (44) protruding, in the guide-axis direction, beyond the free end (68) of the lateral surface (64) facing the web (35).

10. Gripping or clamping device (2) according to any of the preceding claims, **characterized in that** at least two main jaws (10, 12) are provided that can be moved towards one another and away from one another in the clamping direction (6), and **in that** the wedge hook (22) comprises at least two hooks (29) and one web portion (31) located between the relevant hook (29) and the guide axis (20) in each case, one hook (29) cooperating with one main jaw (10, 12) in each case.

## Revendications

1. Dispositif de préhension ou de serrage (2) avec un boîtier de base (4), avec au moins une mâchoire de base (10, 12) pouvant rentrer dans le boîtier de base (4) et en sortir le long d'une direction de serrage (6), avec un crochet cunéiforme (22) pouvant être entraîné transversalement par rapport à la direction de serrage (6) le long d'un axe de guidage (20), dans lequel le crochet cunéiforme (22) présente au moins un crochet (29) et un élément jointif (35), situé entre le crochet (29) et l'axe de guidage (20), avec une partie d'élément jointif (31), dans lequel le crochet (29) présente des surfaces de guidage (26, 33) disposées parallèlement l'une à l'autre, s'étendant de manière inclinée par rapport à la direction de serrage (6) et par rapport à l'axe de guidage (20), qui sont accouplées en mouvement à une rainure de guidage (30) côté mâchoire de base, s'étendant parallèlement à celles-ci, de telle sorte qu'un déplacement du crochet cunéiforme (22) le long de l'axe de guidage (20) entraîne un déplacement de la mâchoire de base (10, 12) le long de la direction de serrage (6), dans lequel le crochet (29) présente une hauteur (43) s'étendant dans la direction d'axe de guidage (21), qui est supérieure à la hauteur (23) de la partie d'élément jointif (31), de sorte que le crochet (29) forme une partie de prolongement (44) s'étendant dans la direction d'axe de guidage (21), dans lequel les surfaces de guidage (26, 33) coïncident dans la direction de serrage (6), et dans lequel le crochet (29) est réalisé de manière cylindrique ou parallélépipédique, **caractérisé en ce que** les surfaces de guidage (26, 33) forment respectivement un bord supérieur (32, 34) avec une face supérieure (36) du crochet (29) s'étendant perpendiculairement à l'axe de guidage (20), dans lequel les bords supérieurs (32, 34) et la face supérieure (36) du crochet (29) se situent dans un plan E₁ s'étendant perpendiculairement à l'axe de guidage (20), et que la partie d'élément jointif (31) présente une face supérieure (49) s'étendant dans le plan E₁ perpendiculairement à l'axe de guidage (20).

2. Dispositif de préhension ou de serrage (2) selon la revendication 1, **caractérisé en ce que** le crochet cunéiforme (22) présente une partie de réglage (52) s'étendant dans l'axe de guidage (20) ou autour de celui-ci, dans lequel la partie de réglage (52) fait saillie de la partie de prolongement (44) dans la direction d'axe de guidage.

3. Dispositif de préhension ou de serrage (2) selon l'une quelconque des revendications précédentes, **caractérisé en ce que** la partie d'élément jointif (31) présente une face inférieure (47) s'étendant dans un plan E₂ perpendiculairement à l'axe de guidage (20), que les surfaces de guidage (26, 33) forment respectivement un bord inférieur (38, 40) avec une face inférieure (42) du crochet (29) s'étendant perpendiculairement à l'axe de guidage (20), dans lequel les bords inférieurs (38, 40) se situent dans un plan E₃, et dans lequel le plan E₃ est espacé du plan E₂, de sorte que la partie de prolongement (44) s'étend vers le bas.

4. Dispositif de préhension ou de serrage (2) selon la revendication 3, **caractérisé en ce que** le rapport V de l'écart du plan E₂ par rapport au plan E₃ sur l'écart du plan E₁ par rapport au plan E₃ se situe dans la plage de 0, 15 à 0,35 et en particulier dans la plage de 0,25 et/ou que l'écart du plan E₂ par rapport au plan E₃ se situe dans la plage de 1 mm à 4 mm et en particulier dans la plage de 1,5 mm à 2,5 mm.

5. Dispositif de préhension ou de serrage (2) selon l'une quelconque des revendications précédentes, **caractérisé en ce que** le boîtier de base (4) présente dans la zone tournée vers la partie de prolongement (44) un évidement (46) destiné à loger la partie de prolongement (44) lorsque la mâchoire de base (10, 12) est rentrée ou sortie.

6. Dispositif de préhension ou de serrage (2) selon l'une quelconque des revendications précédentes, **caractérisé en ce que**, dans la position sortie ou rentrée de la mâchoire de base (10, 12), la face supérieure du crochet (29) se situe avec la face supérieure d'une partie côté mâchoire de base délimitant la rainure de guidage (30) dans un plan s'étendant perpendiculairement à l'axe de guidage (20).

7. Dispositif de préhension ou de serrage (2) selon l'une quelconque des revendications précédentes, **caractérisé en ce que** le crochet (29) et/ou la partie côté mâchoire de base délimitant la rainure de guidage (30) présentent des zones d'arrondi (37, 39).

8. Dispositif de préhension ou de serrage (2) selon l'une quelconque des revendications précédentes, **caractérisé en ce que** la partie d'élément jointif (31) est formée sur le crochet (29) dans la zone de la surface de guidage intérieure tournée vers l'axe de guidage (20), de sorte que la surface de guidage intérieure (26) comprend deux parties de surface de guidage (26', 26") espacées l'une de l'autre et s'étendant symétriquement l'une par rapport à l'autre.

9. Dispositif de préhension ou de serrage (2) selon l'une quelconque des revendications 2 à 8, **caractérisé en ce que** la partie de réglage (52) présente une surface d'enveloppe extérieure (64), dans lequel la surface d'enveloppe (64) est réalisée sous la forme d'une surface d'étanchéité et/ou de guidage, et dans lequel la partie de prolongement (44) fait saillie de l'extrémité libre (68), tournée vers l'élément jointif (35), de la surface d'enveloppe (64) dans la direction d'axe de guidage.

10. Dispositif de préhension ou de serrage (2) selon l'une quelconque des revendications précédentes, **caractérisé en ce qu'**au moins deux mâchoires de base (10, 12) pouvant se déplacer en direction l'une de l'autre et à distance l'une de l'autre le long de la direction de serrage (6) sont prévues, et que le crochet cunéiforme (22) comprend au moins deux crochets (29) et respectivement une partie d'élément jointif (31) située entre le crochet (29) respectif et l'axe de guidage (20), dans lequel respectivement un crochet (29) coopère avec respectivement une mâchoire de base (10, 12).
